# EUROPÄISCHE PATENTSCHRIFT

(11) **EP 1 715 221 B1**
(45) Veröffentlichungstag und Bekanntmachung des Hinweises auf die Patenterteilung: **13.05.2009**
(21) Anmeldenummer: 06004431.0
(22) Anmeldetag: 04.03.2006
(51) Int. Cl.: F16J 3/04, F16F 9/04, F16J 3/06

(54) **Befestigung eines Endabschnitts eines Rollbalgs an einem Anschlussteil**
Fixing of the end part of a bellow to a connecting part
Fixation de l'extrémité d'un soufflet à un embout de connexion

(30) Priorität: 19.04.2005 DE 102005017995
(43) Veröffentlichungstag der Anmeldung: 25.10.2006
(73) Patentinhaber: Carl Freudenberg KG, 69469 Weinheim (DE)
(72) Erfinder: Utermöhlen, Richard, 21279 Appel (DE)

(56) Entgegenhaltungen:
- EP-A- 1 496 284
- DE-A- 19 740 981
- US-A- 3 822 570
- US-A1- 2002 153 646

## Beschreibung

### Technisches Gebiet

Die Erfindung betrifft die Befestigung eines Endabschnitts eines Rollbalgs an einem Anschlussteil. Bei der Abfederung von Fahrzeugen werden immer häufer Rollbälge verwendet. Diese werden in Form von hohlzylindrischen Schlauchkörpern hergestellt, die aus elastischen Werkstoffen mit Verstärkungseinlagen bestehen. Ein Problem der Verwendung von Rollbälgen ist deren Befestigung an den entsprechenden Armaturteilen, die hohen Zugkräften bei gleichzeitig hoher Dichtheit Stand halten sollen.

### Stand der Technik

In der gattungsgemäßen DE 197 40 981 A1 ist die Befestigung eines Schlauchrollbalgs aus einem elastomeren Werkstoff behandelt, bei der das Ende des Rollbalgs auf ein Anschlussteil geschoben wird und dort mittels eines radial verformbaren Spannrings befestigt wird. Um die Dichtigkeit des Rollbalgs im Bereich des Spannrings zu verbessern, wird im Bereich des Spannrings am Spannring selbst oder auch am Anschlussteil bzw. Rollbalg ein Elastomerstreifen angebracht.

Eine andere Möglichkeit der Befestigung eines wulstlosen Endabschnitts eines Rollbalgs an einer Armatur zeigt die DE 40 04 451 A1. Für die Befestigung des Endabschnitts des Schlauchkörpers wird die Wand des Schlauchkörpers zwischen zwei Einspannteilen eingespannt, die mit zwei sich gegenüber liegenden konischen Umfangsrippen ausgestattet sind. Hierdurch werden zwei hintereinander liegende Einspannzonen gebildet und so der Schlauchkörper zwischen den Einspannteilen gehalten.

Eine weitere Möglichkeit der Befestigung eines Luftfeder-Rollbalgs an einem Anschlussteil zeigt die DE 199 07 656 A1. Dort werden die topfförmig ausgebildeten Abstützteile mit radial verjüngten Absätzen versehen, die radiale Nuten bilden, in denen die Enden der Rollbälge durch Klemmringe gehalten werden.

### Darstellung der Erfindung

Der Erfindung liegt die Aufgabe zu Grunde, eine Befestigung des Rollbalgs an einem Anschlussteil zu schaffen, die eine hohe Festigkeit, insbesondere gegenüber Zugkräften aufweist und eine hohe Dichtigkeit des Rollbalgs gegenüber dem Anschlussteil hat. Die Befestigung soll möglichst einfach im Aufbau und bei der Herstellung sein. Darüber hinaus soll die Möglichkeit gegeben sein, die Befestigung des Rollbalgs in Verbindung mit einer Außenführung für das Abrollen des Rollbalgs aufzuzeigen.

Die Lösung der gestellten Aufgabe wird mit den Merkmalen des Anspruchs 1 erreicht.

Bei der erfindungsgemäßen Ausführung der Befestigung des Endabschnitts eines Rollbalgs an einem Anschlussteil wird die Außenführung mit der für das Abrollen des Rollbalgs vorgesehenen Abrollfläche mit einbezogen und der Endabschnitt des Rollbalgs zwischen dem Anschlussteil und dem Endteil der Außenführung durch radiales Anpressen des Endteils eingeklemmt. Der Klemmvorgang selbst wird mit den an sich bekannten Mitteln durch radiales Anpressen des Endteils der Außenführung durchgeführt.

Die Verwendungsmöglichkeit einer solchen Rollbalg-Befestigung wird bei Luftfedern gesehen, deren Balg eine Außenführung benötigt. Dabei ist der Endabschnitt des Rollbalgs wulstlos ausgebildet.

Zur Unterstützung der Dichtheit zwischen Rollbalg und Anschlussteil und auch zu erhöhter Aufnahme von Zugkräften, ist die dem Rollbalg zugewandte Seite des Anschlussteils mit mindestens einer umlaufenden Nut versehen. Bei Anwendung mehrerer Nuten, die zahnartig in die Fläche des Rollbalgs eingedrückt werden, ergibt sich eine gute Unterstützung der Befestigung. Weiterhin ist den Rand des Anschlussteils in Richtung auf den Rollbalg mit einer Wulst versehen, die ein verstärktes Einklemmen des Rollbalgs in diesem Bereich ergibt. Zur Unterstützung dieser Maßnahme kann das Endteil der Außenführung in dem den Nuten gegenüber liegenden Klemmbereich eine in Klemmrichtung weisende Verstärkung haben.

Eine äußerst einfache Möglichkeit der Einbindung des Rollbalgs zwischen dem Anschlussteil und der Außenführung kann dadurch erreicht werden, dass der Anschlussteil im Bereich des axialen Rands des Rollbalgs eine umlaufende Nut hat, in die der Rollbalgrand durch Umbördeln des Rands der Außenführung eingedrückt wird. Verschiedene konstruktive Möglichkeiten sind hier denkbar.

Im Rahmen des Erfindungsgedankens ist auch die Anwendung eines Klemmrings möglich, durch den das Endteil der Außenführung umfasst wird. Der Klemmring wird bei der Herstellung der Verbindung gewissermaßen auf die Außenführung aufgelegt und durch das Klemmwerkzeug radial zusammengepresst, wobei gleichzeitig auch ein radiales Zusammenpressen des Endteils der Außenführung stattfindet.

### Kurzbeschreibung der Zeichnung

Anhand mehrerer in der Zeichnung dargestellter Ausführungsbeispiele wird die Erfindung nachstehend näher erläutert.

Es zeigt
- Fig. 1: einen Schnitt durch eine Befestigung mit einer Verstärkung an der Außenführung;
- Fig. 2: und
- Fig. 3: zwei Befestigungsmöglichkeiten des Rollbalgs mit einer umlaufenden Nut im Anschlussteil und umgebördelten Rändern der Außenführung und
- Fig. 4: eine Befestigung mit einem Klemmring.

### Ausführung der Erfindung

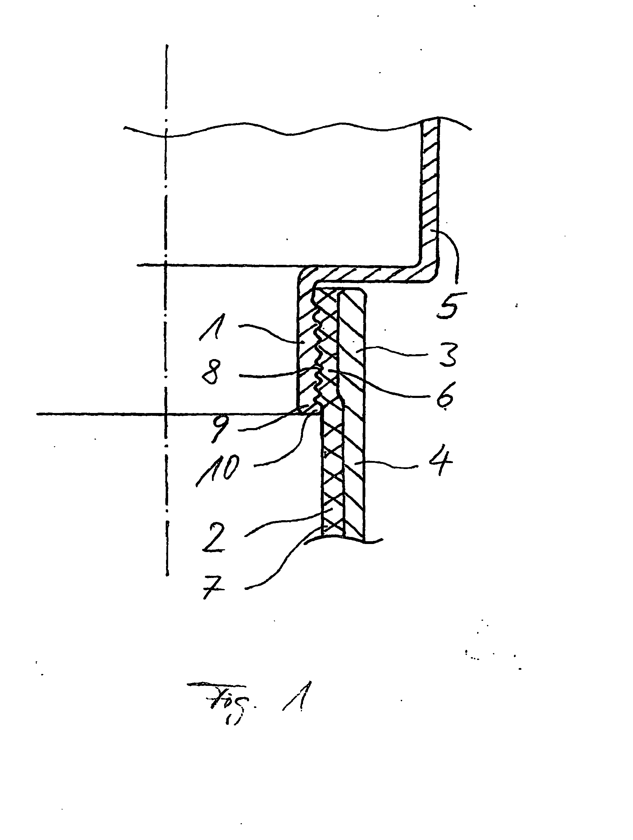

In der Fig. 1 ist schematisch im Schnitt die Befestigung des Rollbalgs 2 zwischen dem Anschlussteil 5 und der Außenführung 4 gezeigt. Der Endabschnitt 6 des Rollbalgs 2 wird zwischen dem Kragen 1 des Anschlussteils 5 und dem Endteil 3 der Außenführung 4 eingeklemmt. An der Außenführung 4 befindet sich die Abrollfläche 7 für den Rollbalg 2. Der Endabschnitt 6 des Rollbalgs 2 ist wulstlos ausgebildet. Die dem Rollbalg 2 zugewandte Seite des Anschlussteils 5 ist mit mehreren umlaufenden Nuten 8 oder Profilerhöhungen versehen. Außerdem ist der Rand 9 des Anschlussteils 5 mit einer Wulst 10 versehen. Der Endabschnitt 6 des Rollbalgs 2 ist auf diese Weise fest zwischen dem Endteil 1 des Anschlussteils 5 und dem Endteil 3 der Außenführung 4 eingeklemmt. Das Einklemmen erfolgt nach Aufschieben des Rollbalgs auf das Anschlussteil 5 durch radiales Anpressen des Endteils 3 der Außenführung 4.

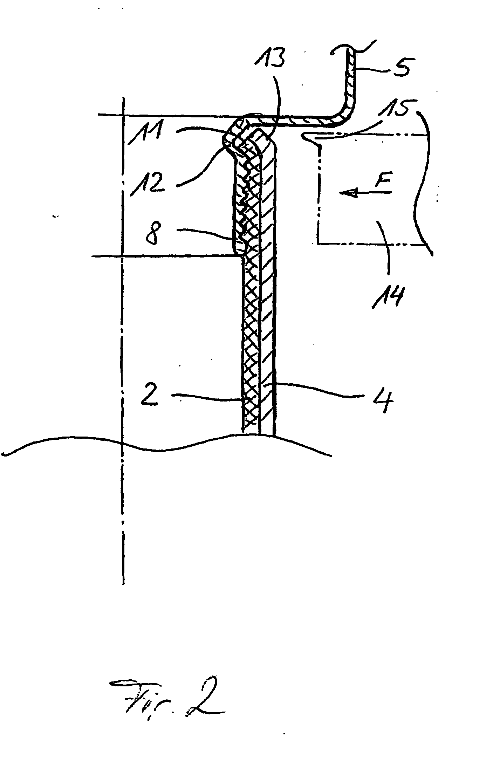

Die Fig. 2 zeigt eine vereinfachte Ausführung, bei der der Anschlussteil 5 im Bereich des axialen Rands 11 des Rollbalgs 2 eine umlaufende Nut 12 hat, in die der Rollbalgrand 11 durch Umbördeln des Rands 13 der Außenführung 4 eingedrückt ist. Für das Eindrücken des Rands 13 ist ein strich-punktiert dargestelltes Werkzeug 14 mit einem Nasenrand 15 vorgesehen. Günstig ist es, wenn auch in diesem Fall der Anschlussteil 5 mit Nuten 8 ausgestattet ist.

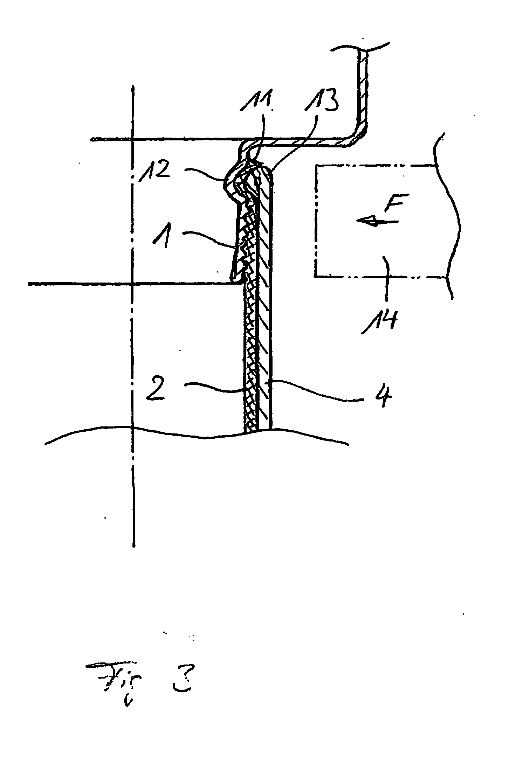

Eine mit der Fig. 2 vergleichbare Ausführungsform zeigt die Fig. 3. Hier wird der Rollbalgrand 11 in die umlaufende Nut 12 durch den um 180° umgebördelten Rand 13 der Außenführung 4 eingedrückt.

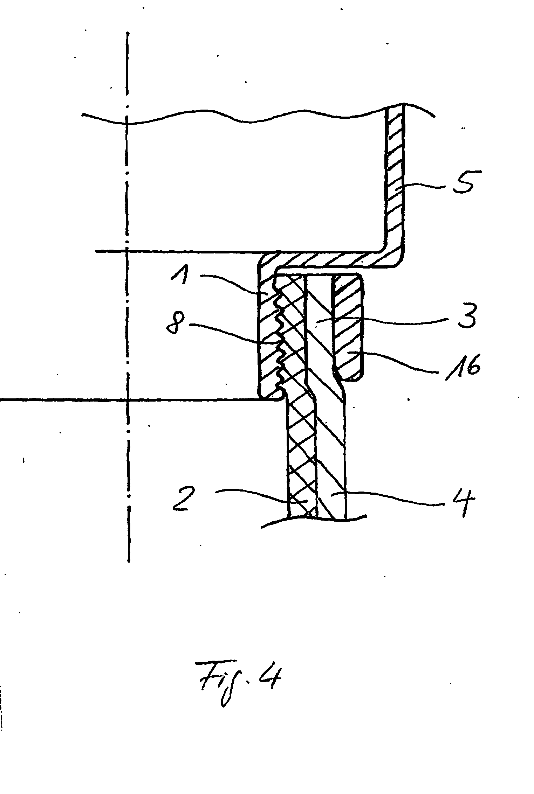

Die Fig. 4 zeigt eine Befestigungsmöglichkeit, bei der der Endteil 3 der Außenführung 4 von dem Klemmring 16 umfasst wird. Zur Unterstützung der Dichtheit sind auch hier am Anschlussteil 5 umlaufende Nuten 8 vorgesehen.

## Patentansprüche

1. Befestigung eines wulstlosen Endabschnitts (6) eines Rollbalgs (2) an einem Anschlussteil (5) bei einer Luftfeder oder einem Luftfederdämpfer, wobei die dem Rollbalg (2) zugewandte Seite des Anschlussteils (5) mit mindestens einer umlaufenden Nut (11) versehen ist und der Rand (12) des Anschlussteils (5) in Richtung auf den Rollbalg (2) eine Wulst (10) aufweist, **dadurch gekennzeichnet, dass** der Endabschnitt (6) des Rollbalgs (2) zwischen dem Anschlussteil (5) und dem Endteil (3) einer Außenführung (4) mit für das Abrollen des Rollbalgs (2) vorgesehener Abrollfläche (7) durch radiales Anpressen des Endteils (3) eingeklemmt ist.

2. Befestigung eines wulstlosen Endabschnitts eines Rollbalgs an einem Anschlussteil nach Anspruch 1, **dadurch gekennzeichnet, dass** das Endteil (3) der Außenführung (4) in dem den Nuten (8) gegenüber liegenden Klemmbereich eine in Klemmrichtung weisende Verstärkung (3) hat.

3. Befestigung eines wulstlosen Endabschnitts eines Rollbalgs an einem Anschlussteil nach Anspruch 1, **dadurch gekennzeichnet, dass** der Anschlussteil (5) im Bereich des Rands (11) des Rollbalgs (2) eine umlaufende Nut (12) hat, in die der Rollbalgrand (11) durch Umbördeln des Rands (13) der Außenführung (4) eingedrückt ist.

4. Befestigung eines wulstlosen Endabschnitts eines Rollbalgs an einem Anschlussteil nach Anspruch 1 bis 3, **dadurch gekennzeichnet, dass** das Endteil (3) der Außenführung (4) von einem Klemmring (16) umfasst ist.

## Claims

1. Fixing of a beadless end portion (6) of a rolling lobe (2) to a connecting part (5) in the case of a air spring or an air spring damper, wherein that side of the connecting part (5) which faces the rolling lobe (2) is provided with at least one encircling groove (11), and the edge (12) of the connecting part (5) has a bead (10) in the direction of the rolling lobe (2), **characterized in that** the end portion (6) of the rolling lobe (2) is clamped between the connecting part (5) and the end part (3) of an external guide (4) having a rolling surface (7), which is provided for the rolling of the rolling lobe (2), by means of the end part (3) being pressed on radially.

2. Fixing of a beadless end portion of a rolling lobe to a connecting part according to Claim 1, **characterized in that**, in the clamping region lying opposite the grooves (8), the end part (3) of the external guide (4) has a reinforcement (3) which points in the clamping direction.

3. Fixing of a beadless end portion of a rolling lobe to a connecting part according to Claim 1, **characterized in that**, in the region of the edge (11) of the rolling lobe (2), the connecting part (5) has an encircling groove (12) into which the rolling-lobe edge (11) is pressed by the edge (13) of the external guide (4) being bent over.

4. Fixing of a beadless end portion of a rolling lobe to a connecting part according to Claims 1 to 3, **characterized in that** the end part (3) of the external guide (4) is surrounded by a clamping ring (16).

## Revendications

1. Fixation d'une extrémité (6) sans bourrelet d'un soufflet (2) à un embout de connexion (5) dans un coussin d'air ou un amortisseur pneumatique à coussin d'air, le côté de l'embout de connexion (5) tourné vers le soufflet (2) étant pourvu d'au moins une rainure (11) périphérique et le bord (12) de l'embout de connexion (5) présentant un bourrelet (10) en direction du soufflet (2), **caractérisée en ce que** l'extrémité (6) du soufflet (2) est coincée entre l'embout de connexion (5) et la partie d'extrémité (3) d'un guide externe (4) par le biais de la surface de déroulement (7) prévue pour dérouler le soufflet (2) par pression radiale de la partie d'extrémité (3).

2. Fixation d'une extrémité sans bourrelet d'un soufflet à un embout de connexion selon la revendication 1, **caractérisée en ce que** la partie d'extrémité (3) du guide externe (4) a, dans la zone de serrage opposée aux rainures (8), un renfort (3) comportant une direction de serrage.

3. Fixation d'une extrémité sans bourrelet d'un soufflet à un embout de connexion selon la revendication 1, **caractérisée en ce que** l'embout de connexion (5) a, dans la zone de bordure (11) du soufflet (2), une rainure (12) périphérique dans laquelle le bord de soufflet (11) est comprimé par bridage du bord (13) du guide externe (4).

4. Fixation d'une extrémité sans bourrelet d'un soufflet à un embout de connexion selon l'une quelconque des revendications 1 à 3, **caractérisée en ce que** la partie d'extrémité (3) du guide externe (4) est entourée par une bague de serrage (16).
